# EUROPEAN PATENT APPLICATION

(11) **EP 4 843 381 A1**
(43) Date of publication of application: **25.11.2026**
(21) Application number: 25177301.6
(22) Date of filing: 19.05.2025
(51) Int. Cl.: A01J 5/04, G01N 35/00, G01N 35/04

(54) **EQUIPO DE LECTURA AUTOMÁTICA DE IDENTIFICADORES DE VIALES EN EQUIPOS DE TOMA DE MUESTRAS**

(71) Applicant: Sayca Samplers, S.L., 28802 Alcala de Henares Madrid (ES)
(72) Inventor: Carnero Ibáñez, Rodrigo, 28009 Madrid (ES); Carnero Carretero, Juan Carlos, 28028 Madrid (ES)
(74) Representative: González López-Menchero, Álvaro Luis

(57) **Abstract**

The present invention relates to a device for automatically reading vial identifiers in a sampling device comprising a removable tray (6) connected to a control unit (5), where the removable tray (6) is insertable in a sampling device (1). Furthermore, the device has a pressure switch (7), as well as a cycle start sensor and reading means for reading the identification of vials that can be housed in a sampling device, which can be either by optical reading means or by RFID signal antennas.

## Description

### SUBJECT MATTER OF THE INVENTION

The subject matter of the present invention is, as stated in the title of the invention, a device for automatically reading vial identifiers in a sampling device, which allows one-to-one identification and correspondence between the identification of the vial and the animal to which the sample corresponds.

The present invention is characterised by the special design and configuration of each and every one of the elements and means used in the reading device according to the invention, in such a way that the identifiers on the vials used to take samples from animals are automatically read.

Therefore, the present invention falls within the field of animal sampling and more precisely to the automatic identification of said vials.

### BACKGROUND OF THE INVENTION

Currently, in robotic sampling systems used in the dairy sector, sampling is performed manually, and the link between a sample and the corresponding animal (in this case, a cow) is established by indirect methods.

Dairy associations usually provide pre-printed unique identifiers before going to the livestock farm where the milking robots are located. Once the robot completes the sample collection process, it generates a report with the position of each sample in the sampling system, sorted according to the sequence in which the cows enter the robot.

The operator, based on this report, must manually locate each vial in the sample collector, identify which cow it corresponds to according to the indicated position, and lastly, manually stick the corresponding identifier label on the vial.

This process is prone to human error: confusing labels, sticking identifiers on incorrect vials, or misinterpreting the report, which compromises the traceability of the samples. Such errors not only affect the integrity of the data collected, but can also completely invalidate the results of the analysis.

Moreover, this method takes a significant amount of time. Under normal conditions, an operator can spend up to two hours a day on the association process between samples and animals alone.

Currently, there is no known system that allows individual identification of sample collection bottles by reading from the lower portion. The method currently used is entirely manual, which involves a high risk of errors and a large investment of time and resources.

Therefore, the aim of the present invention is to completely eliminate this risk, guaranteeing 100 % traceability from sample collection to analysis, and completely eliminating manual intervention in the identification process. This represents a significant technical progress, not only because of the improvement in accuracy and reliability, but also because of the significant reduction in time and effort required in the current process.

### DESCRIPTION OF THE INVENTION

The subject matter of the present invention is essentially included in the independent claim and the different embodiments are included in the dependent claims.

The present invention relates to a device designed for automatically reading the unique identifiers located at the base of the vials of the sampler, with the aim of ensuring full traceability of the sampling process in automated milking environments.

In this system, each vial incorporates a unique identifier located on its base. This identifier can consist of a QR code, barcode or RFID chip. By means of a reader system -either an optical camera or an RFID antenna- the device according to the invention automatically detects and registers said identifier. In addition, it stores the date, the exact time (HH:mm:ss) and the physical position of the sample in the sampler in an associated database.

Thanks to this approach, even if at the end of the sampling an operator handles the vials or changes their position, traceability is not compromised since the unique identification is directly linked to the content of the vial (unique Identifier), not to its temporary location.

Once the sampling process is completed, the device is synchronised with the system of the milking robot. This communication can take place in two ways:
- Through a call to an API (Application Program Interface) of the robot.
- By importing a file in .csv, .json or .txt format generated by the robot.

The system cross-checks the data recorded during sampling (position, date and time) with that provided by the robot, using the milking interval and the relative position of the samples to confirm that each vial corresponds to the correct cow. This allows a highly accurate validation of the correspondence between sample and animal, ensuring 100% traceability.

To ensure that the reading process starts at the correct position, the system has a cycle start identifier sensor that detects the starting point of the reading cycle. Likewise, in order to correctly account for the position movement between samples, a sample change detector sensor is used, which in a non-limiting preferred embodiment is a pressure switch. This sensor detects the pressurised air pulses that control the movement of the sample collector, allowing the system to keep an accurate count of the positions travelled.

The device consists of a removable tray connected to a control unit provided with a display, the whole device being designed to be precisely integrated inside a sampler device.

A limit switch in the removable tray ensures that the reading process only starts when the tray is fully inserted in its initial position. This initial verification is critical to ensure correct synchronisation with the sampling cycle.

The device for automatically reading vial identifiers has a sample change sensor connected to the pneumatic circuit of a sampling device, which detects this pressure increase. When the contact of the sample change sensor is closed, the device recognises that a new sampling has started.

At this point, the system performs two critical actions:
1. It internally records that the system has moved to a new position, corresponding to a new vial.
2. It reads the unique identifier of the bottle, either by means of an optical camera or an RFID antenna, depending on the technology implemented in the vial.

The device is prepared to detect possible false positives, for example, if air pressure is detected without actual movement of the cylinder (due to blockage, mechanical failure or residual pressure). For this purpose, the device verifies that the identifier read has not been registered before. If it detects a duplicate reading, it alerts the operator to avoid loss of traceability.

To ensure a reliable reading of the identifier, the inside of the sampler device has been redesigned, such as the presence of an intermediate disc between two end discs in order to ensure the vertical arrangement of each vial and to ensure a 100% reading, thereby ensuring that the vial is completely aligned with the reading device.

The device for automatically reading vial identifiers according to the invention can have two reading modes.
- Reading by RFID antennas

An array of antennas distributed in rows is used for vials provided with an RFID chip. The number of antennas depends on the number of sampling rows: there can be 1 to 7, depending on the capacity of the sampler, but the number of rows is not limited. When reference is made to the number of rows of the sampling device, given that the samples are arranged in a circular arrangement, it means the number of concentric rings in which the samples are arranged.

Each antenna covers a corona or ring of samples. At each turn of the system, the reading system takes one reading per corona or ring, and compares the current reading with that of the previous turn. This cross-check provides an additional layer of security by detecting whether the mechanism has become jammed or has failed while changing position.
- Optical reading, which can be QR codes or barcodes.

A mobile optical reader mounted on an oscillating arc mechanism, which moves to cover all rows of the tray, is used for vials identified with QR or barcodes.
- The path of the reader is limited by two physical stops that define the start and end position of the arc, preventing the reader from exceeding the limits of the reading area.
- The movement between rings or crowns is performed by means of physical pins that collide with a mechanical shifter, which only collides after one complete turn.
- This ensures that each row is fully scanned before proceeding to the next, strengthening the reliability of the system.

The present invention introduces multiple improvements over the prior art:
- Significant reduction of the time needed to link each vial to the corresponding animal.
- Reduced operational costs by automating a process that until now required intensive manual intervention.
- 100% traceability between sample and animal, eliminating human error and ensuring data integrity.
- It is a disruptive innovation in the livestock sector as it sets a new standard in sample management for individual analysis.

Due to the features of the device according to the invention, the automatic reading of vial identifiers in a sampling device and their unequivocal association with the animal from which the sample has been taken is achieved. This is possible because during the process of the unique identification of the vials, the time at which the identification has taken place is recorded in the reading device. Furthermore, during the sampling process, the time of sampling is also recorded, having previously identified the animal to which the sample corresponds, thereby making it possible to unequivocally match the vial with the animal to which said sample contained in the vial corresponds.

Except when indicated otherwise, all of the technical and scientific elements used in this specification have the meaning commonly understood by a person with average skill in the art to which this invention belongs. When this invention is put into practice, methods and materials may be used that are similar or equivalent to the ones described in the specification.

Throughout the description and the claims, the word "comprise" and its variants are not intended to exclude other technical features, additions, components or steps. For those skilled in the art, other objects, advantages and features of the invention will be deduced from both the description and the practical use of the invention.

### DESCRIPTION OF THE FIGURES

As a complement to the description provided herein, and for the purpose of helping to make the features of the invention more readily understandable, in accordance with a preferred practical exemplary embodiment thereof, said description is accompanied by a set of drawings which, by way of illustration and not limitation, represent the following.
Figure 1 shows a representation of a sampling device on which the device for automatically reading vial identifiers has been mounted.
Figure 2 shows the automatic reading device and the relative position in relation to the discs, where the vials of the samples are arranged.
Figure 3 shows a perspective representation of the sampling device according to the invention, in which an optical camera is used as a reading means.
Figure 4 shows a side view representation of the automatic reading device coupled to the sampling device where the presence of ring changer stops or similar must be noted.
Figure 5 shows a sequence of figures where the rotation of the swivel arm reading different crowns or rings can be seen.
Figure 6 shows the automatic reading device of the invention in which distributed antennas are used as a means for reading the identification of the vials.

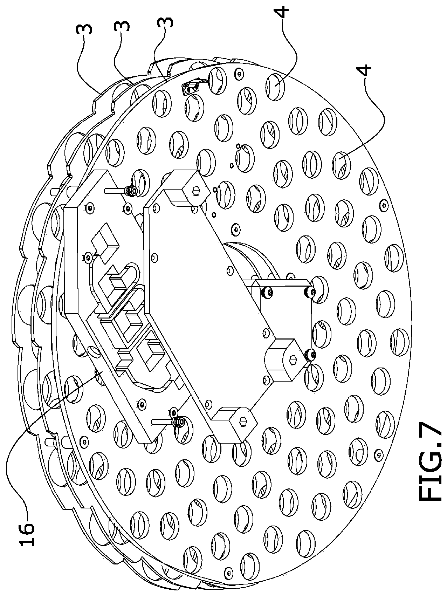

Figure 7 is a perspective representation showing the relative position of the antenna readers in relation to the vial-carrier discs.
Figure 8 shows a detailed view of the antennas.

### PREFERRED EMBODIMENT OF THE INVENTION

In light of the figures, a preferred embodiment of the proposed invention is described below.

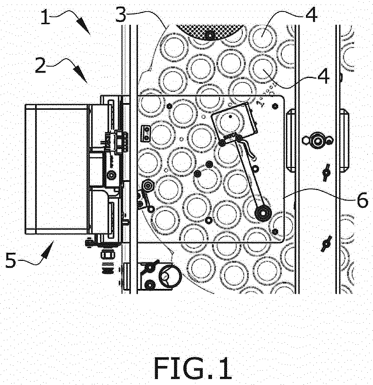

Figure 1 shows a sampling device (1) comprising a series of discs (3) arranged in parallel to each other, where the sample-carrying discs have a series of holes (4) placed in concentric crowns or rings, where the holes (4) of the discs (3) are opposite each other, such that the sampling vials can be housed and said vials remain in a perfectly vertical position, which results in a more accurate reading by the reading device.

The automatic reading device (2) is coupled to said sampling device (1), which automatic reading device, as can be seen, has a control unit (5) provided with a display and a removable tray (6) which is coupled inside the sampling device (1) and is positioned under the set of discs (3).

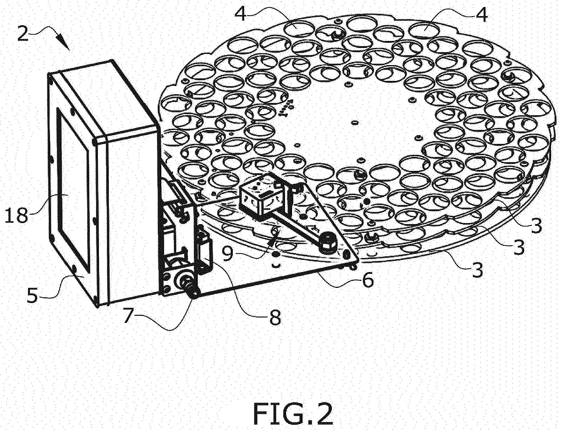

Figure 2 shows the automatic reading device (2) in a representation that allows other structural details of the device to be seen. In this figure, in addition to the removable tray (6) and the control unit (5), it can be seen that the control unit (5) has a display (18) on which the measurement process is shown, in addition to being able to programme the automatic reading device using this display (8), and that a sample change sensor is linked to the control unit, which in the non-limiting embodiment shown, is a pressure switch (7), while there is a cycle start sensor in the removable tray (6), which in the non-limiting embodiment shown, is a limit switch (8), in addition to means for reading the unique identification of vials, and which, in the embodiment shown, the reading means consist of a reading by means of an optical camera (9).

The cycle start sensor, which in the embodiment shown is a pressure switch (7), detects a pressure increase that corresponds to a new sampling. When the contact of the pressure switch is closed, the reading device according to the invention, recognises that a new sampling has started.

At this point, the system performs two critical actions:
- It internally records that the system has moved to a new position, corresponding to a new vial.
- It reads the unique identifier of the bottle, either by means of an optical camera or an RFID antenna, depending on the technology implemented in the vial.

Furthermore, the cycle start sensor ensures that the reading process only starts when the tray is fully inserted in its initial position.

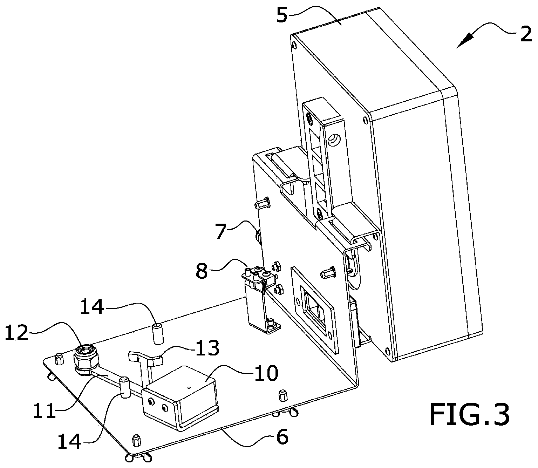

Figures 2, 3 and 4 show the automatic reading device in which the identification of the vial is read by optical reading of either a QR code or a barcode.

The reading means by optical camera (9) comprise a camera (10) attached to one end of a swivel arm (11), while the opposite end of said swivel arm (11) is attached to a pivot point (12) with respect to which it rotates; furthermore, said swivel arm (11) is provided with a shifter (13).

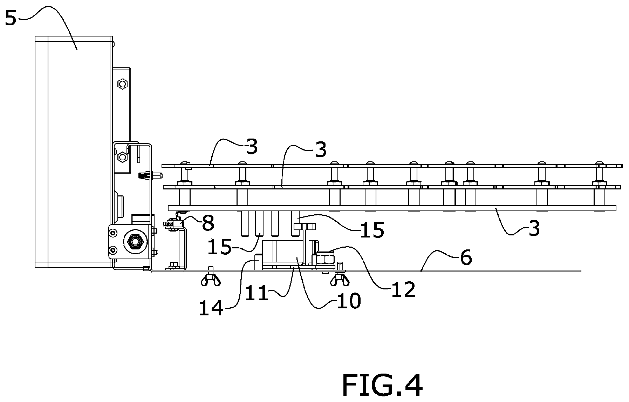

Said swivel arm (11) can be positioned between the positions between the limits marked by the physical stops (14). The shifter (13) is responsible for rotating the swivel arm (11) when it comes into contact with shifter stops (15) arranged on the lower face of the set of vial-carrier discs (13), as shown in figure 4. This change in position of the swivel arm (11) and thus of the camera (10) causes the reading to be made on an increasingly outer corona or ring.

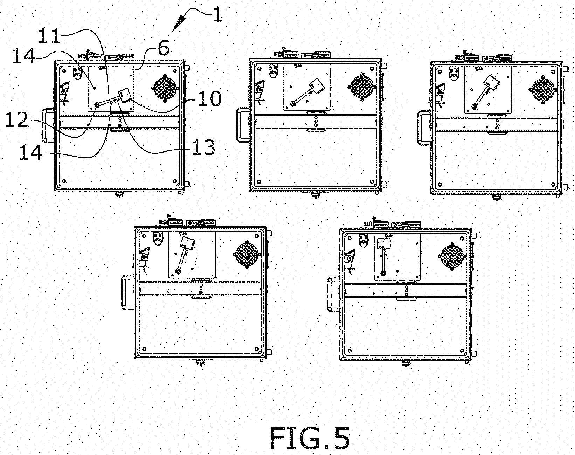

Figure 5 shows the automatic reading device, particularly the removable tray (6) inserted inside a sampling device (1), where in the case of the identification of the vials by means based on an optical camera (9), the swivel arm (11) adopts different positions between the limiting stops (14), and each position it adopts is the result of the contact of the shifter (13) securely connected to the swivel arm (11) that contacts the shifter stops (15) arranged on the lower disc of the set of discs.

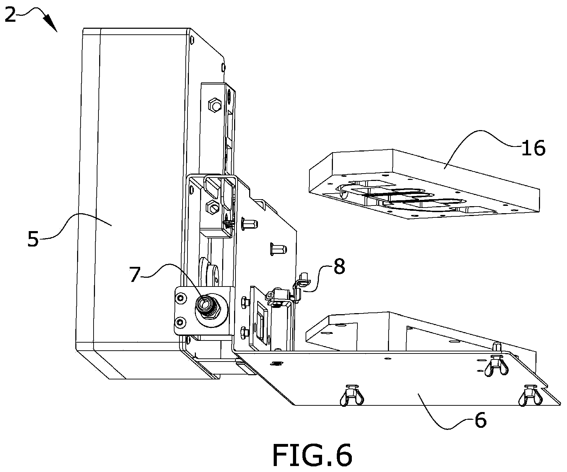

Figure 6 shows the automatic reading device according to the invention, which, in addition to the control unit (5), the pressure switch (7) and the limit switch (8), has reading means by means of antennas (16) positioned such that each of the antennas is responsible for reading the RFID signals emitted by each of the vials placed in a crown or ring of the discs of the sampling device.

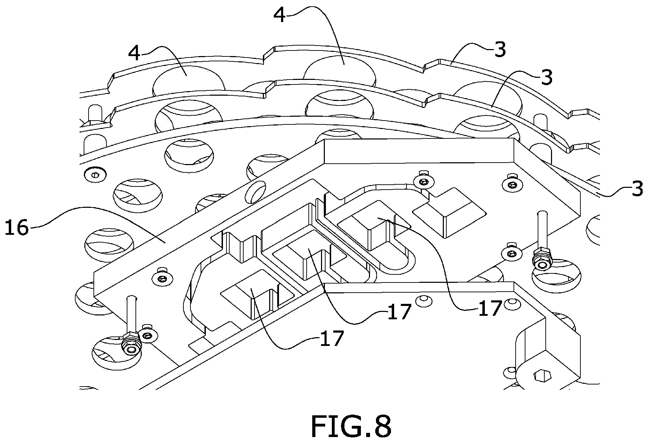

Figure 8 shows how the reading means by means of antennas comprise a series of individual antennas (17) such that each antenna (17) covers a corona or ring. At each turn of the system, the automatic reading device (2) takes one reading per corona or ring, and compares the current reading with that of the previous turn. This cross-check provides an additional layer of security by detecting whether the mechanism has become jammed or has failed while changing position.

Having thus adequately described the nature of the present invention, as well as how to put it into practice, it must be noted that, within its essential nature, the invention may be carried out according to other embodiments differing in detail from that set out by way of example, which the protection sought would equally cover, provided that the fundamental principle thereof is not altered, changed or modified.

## Claims

1. A device for automatically reading vial identifiers in a sampling device **characterised in that** it comprises a removable tray (6) connected to a control unit (5) provided with a display (18), where the removable tray (6) is insertable in a sampling device (1), furthermore, the device has a sample change sensor responsible for detecting a pressure increase corresponding to a new sampling, as well as a cycle start sensor ensuring that the reading process only starts when the tray is fully inserted in its initial position and with reading means for reading the unique identification of vials that can be housed in a sampling device.

2. The device for automatically reading vial identifiers in a sampling device according to claim 1, **characterised in that** the reading means for reading the identification of the vials consist of a reading by means of an optical camera (9).

3. The device for automatically reading vial identifiers in a sampling device according to claim 2, **characterised in that** the reading means by means of an optical camera (9) comprise a camera (10) attached to one end of a swivel arm (11), while the opposite end of said swivel arm (11) is attached to a pivot point (12) with respect to which it rotates; furthermore, said swivel arm (11) is provided with a shifter (13).

4. The device for automatically reading vial identifiers in a sampling device according to claim 1, **characterised in that** the reading means for reading the identification of the vials consist of reading means by means of antennas (16).

5. The device for automatically reading vial identifiers in a sampling device according to claim 1, **characterised in that** the reading means by means of antennas (16) comprises a series of individual antennas (17) arranged corresponding to the crowns or rings defined by the perforations (4) of the rings (3) of the sampling device.

6. The device for automatically reading vial identifiers in a sampling device according to any of the preceding claims, **characterised in that** the cycle start sensor is a limit switch (8).

7. The device for automatically reading vial identifiers in a sampling device according to any of the preceding claims, **characterised in that** the sample change sensor is a pressure switch (7).
